# DEMANDE DE BREVET EUROPEEN

(11) **EP 3 112 224 A1**
(43) Date de publication de la demande: **04.01.2017**
(21) Numéro de dépôt: 16176399.0
(22) Date de dépôt: 27.06.2016
(51) Int. Cl.: B60S 1/40

(54) **ADAPTATEUR POUR RELIER UN BALAI D'ESSUYAGE À UN BRAS D'ENTRAÎNEMENT**

(30) Priorité: 29.06.2015 FR 1556028
(71) Demandeur: Valeo Systèmes d'Essuyage, 78322 Le Mesnil Saint Denis (FR)
(72) Inventeur: MOULEYRE, Guillaume, 63122 Saint Genès Champanelle (FR); TERRASSE, William, 63270 VIC LE COMTE (FR)
(74) Mandataire: Vincent, Catherine Marie Marguerite

(57) **Abrégé**

L'invention vise un adaptateur 26 pour relier un balai d'essuyage 12 à un bras d'entraînement, l'adaptateur comprenant deux parois longitudinales latérales 42a, 42b espacées l'une de l'autre de façon à former entre elles au moins un logement 45 configuré pour recevoir au moins en partie un connecteur 24 du balai d'essuyage, au moins l'une des parois latérales 42a, 42b comprenant au moins un orifice 56, ladite paroi latérale 42a, 42b comprenant en outre un moyen d'appui 54, 54a en saillie d'une face externe 75 de la paroi latérale 42a, 42b, caractérisé en ce que le moyen d'appui 54, 54a est traversé par au moins un orifice 56, ledit moyen d'appui 54, 54a étant issu matière avec la face externe 75 de la paroi latérale 42a, 42b.

## Description

### DOMAINE TECHNIQUE

La présente invention concerne notamment un adaptateur pour relier un balai d'essuyage à un bras d'entraînement, en particulier de véhicule automobile.

### ETAT DE L'ART

Une automobile est classiquement équipée d'essuie-glaces pour assurer un lavage du pare-brise et éviter que la vision qu'a le conducteur de son environnement ne soit perturbée. Ces essuie-glaces comprennent en général un bras d'entrainement, effectuant un mouvement de va-et-vient angulaire, et des balais allongés, porteurs eux-mêmes de lames racleuses réalisées en une matière élastique. Ces lames frottent contre le pare-brise et évacuent l'eau en l'amenant en dehors du champ de vision du conducteur. Les balais sont réalisés sous la forme, soit, dans une version classique, d'étriers articulés qui tiennent la lame racleuse en plusieurs endroits discrets en lui conférant un cintrage lui permettant d'épouser l'éventuelle courbure du pare-brise, soit, dans une version plus récente dénommée "*flat blade"* (pour "lame plate"), d'un ensemble semi-rigide qui maintient la lame racleuse sur toute sa longueur grâce à une ou des vertèbres de cintrage permettant d'appliquer le balai sur le pare-brise sans avoir à utiliser d'étriers.

Le balai est rattaché au bras d'entraînement par un système de connexion comportant un connecteur et un adaptateur. Le connecteur est une pièce qui est solidarisée au balai et qui est en général fixée directement sur la lame racleuse ou sur le balai plat, alors que l'adaptateur est solidaire du bras. L'adaptateur est une pièce intermédiaire qui permet la liaison et la fixation du connecteur sur le bras d'entraînement. Il est en général configuré pour être engagé dans une tête ou pièce terminale en forme de chape et à section transversale en U du bras d'entraînement.

Le connecteur et l'adaptateur comprennent chacun des moyens d'articulation configurés pour coopérer avec des moyens complémentaires de l'autre organe, pour définir au moins un axe transversal de pivotement du connecteur vis-à-vis de l'adaptateur, qui est un axe de pivotement du balai vis-à-vis du bras. Dans la technique actuelle, l'un des organes, tels que le connecteur, comprend en général un axe physique sensiblement cylindrique qui définit l'axe d'articulation et qui est reçu dans un logement de forme complémentaire de l'autre organe.

L'adaptateur comporte en général un corps configuré pour être engagé dans la pièce terminale du bras de façon à ce que ce corps s'étende au moins en partie entre deux jambes latérales sensiblement parallèles de la pièce terminale. Le corps de l'adaptateur est relié à une extrémité à une tête, sur laquelle l'extrémité libre de la pièce terminale vient en butée. Enfin, le corps de l'adaptateur comprend en général un bouton d'actionnement qui est engagé par encliquetage élastique dans un orifice de la pièce terminale, lorsque cette dernière est en butée sur la tête, afin de verrouiller l'adaptateur vis-à-vis de la pièce terminale dans cette position.

Un adaptateur permet d'associer un balai à un type particulier de pièce terminale ou de bras. Dans le cas des pièces terminales précitées à section en U par exemple, il en existe plusieurs variétés. Ces variétés sont très proches en apparence mais diffèrent les unes des autres par des dimensions et en particulier par leurs largeurs ou dimensions latérales, la largeur d'une pièce terminale étant définie par la distance entre les jambes latérales de la pièce terminale et plus exactement par la distance entre les faces externes de ces jambes latérales. Elles varient également par les positions des orifices destinés à coopérer avec les boutons poussoirs de l'adaptateur.

Dans la technique actuelle, il existe autant de variétés d'adaptateur que de variétés de pièces terminales ou d'extrémités de bras d'entrainement, ce qui n'est pas pratique ni économique. Il existe donc un réel besoin d'un adaptateur universel apte à être monté sur au moins deux, voire plus, pièces terminales de bras d'essuie-glace.

Par ailleurs, on a constaté qu'en fonctionnement, l'adaptateur peut se désassembler accidentellement du connecteur du fait d'un jeu au niveau de l'axe d'articulation de l'adaptateur vis-à-vis du connecteur.

L'invention propose un perfectionnement à la technique antérieure.

### EXPOSE DE L'INVENTION

L'invention propose à cet effet un adaptateur pour relier un balai d'essuyage à un bras d'entraînement, l'adaptateur comprenant deux parois longitudinales latérales espacées l'une de l'autre de façon à former entre elles au moins un logement configuré pour recevoir au moins en partie un connecteur du balai d'essuyage, au moins l'une des parois latérales comprenant au moins un orifice, ladite paroi latérale comprenant en outre un moyen d'appui en saillie d'une face externe de la paroi latérale, caractérisé en ce que le moyen d'appui est traversé par au moins un orifice, ledit moyen d'appui étant issu matière avec la face externe de la paroi latérale.

L'adaptateur selon l'invention peut être utilisé comme adaptateur universel, comme cela sera décrit dans le détail dans ce qui suit, c'est-à-dire un adaptateur pour au moins deux bras d'entraînement différents, tels que par exemple au moins un bras à extrémité ou pièce terminale en U, au moins un bras tige (en général dépourvu de pièce terminale), au moins un bras à verrouillage latéral (de l'anglais « side-lock »), etc.

L'adaptateur selon l'invention permet de remédier au problème de la technique antérieure de démontage accidentel de l'adaptateur. En effet, les moyens en saillie d'appui permettent un meilleur maintien, en particulier latéral ou transversal, de l'adaptateur sur le connecteur. Ils sont configurés pour coopérer par appui avec des moyens complémentaires d'un autre élément pour empêcher ou limiter les déformations de l'adaptateur. Ils peuvent en outre être configurés pour rigidifier les parois latérales de l'adaptateur et réduire ainsi leur souplesse.

L'adaptateur selon l'invention peut comprendre une ou plusieurs des caractéristiques suivantes, prises isolément ou en combinaison les unes avec les autres :
- les deux parois longitudinales latérales sont sensiblement parallèles,
- chacune des parois latérales comprend un orifice traversant d'axe perpendiculaire à une direction longitudinale de l'adaptateur,
- le ou les orifices sont configurés pour recevoir au moins un axe d'articulation de l'adaptateur vis-à-vis du connecteur,
- le moyen d'appui en saillie d'une face externe de la paroi latérale est configuré pour former au moins une surface d'appui en direction transversale à une direction longitudinale de l'adaptateur,
- ledit moyen d'appui comprend au moins des bandes de matière en saillie des faces externes des parois latérales,
- lesdites bandes de matière ont une forme allongée et s'étendent longitudinalement entre des bords longitudinaux inférieurs et des bords longitudinaux supérieurs des parois,
- lesdites bandes de matière définissent des faces d'appui sensiblement parallèles entre elles,
- lesdites bandes de matière sont espacées les unes des autres selon une direction longitudinale de l'adaptateur et réparties sur lesdites faces externes dans la même direction,
- chaque paroi latérale comprend au moins quatre desdites bandes de matière,
- les bandes de matière traversées par les orifices ont une largeur mesurée selon une direction longitudinale de l'adaptateur inférieure à celle des autres bandes de matière,
- les bandes de matière traversées par les orifices ont une largeur mesurée selon une direction longitudinale de l'adaptateur inférieure au diamètre dudit orifices,
- les bandes de matière ont sensiblement toutes la même épaisseur mesurée selon une direction perpendiculaire à une direction longitudinale de l'adaptateur,
- l'adaptateur est configuré pour être fixé sélectivement à une pièce terminale d'un premier bras, et à une pièce terminale d'un second bras, différente de celle du premier bras, ledit adaptateur comportant à une extrémité une tête définissant au moins une première surface d'appui d'une partie de pièce terminale et/ou au moins une partie d'un trou d'engagement d'une partie de pièce terminale,
- l'adaptateur comprend notamment au moins un bouton poussoir de verrouillage configuré pour coopérer avec la pièce terminale dudit premier et/ou second bras,
- l'adaptateur est configuré pour être fixé sélectivement à au moins un organe de liaison agencé pour être fixé à au moins un autre bras,

L'invention couvre aussi un premier ensemble comprenant un adaptateur selon l'une quelconque des caractéristiques présentées ci-dessus et un connecteur solidaire du balai d'essuyage.

L'invention vise encore un deuxième ensemble comprenant un adaptateur tel que ci-dessus et ledit organe de liaison pour bras tige qui est configuré pour recouvrir au moins en partie ledit adaptateur, dans lequel ledit organe de liaison comprend deux parois longitudinales latérales destinées à s'étendre sensiblement parallèlement aux parois latérales de l'adaptateur, et comportant sur leurs faces internes des moyens en saillie qui sont configurés pour venir en appui en direction transversale sur les moyens d'appui des parois latérales de l'adaptateur.

Dans ce deuxième ensemble, les faces externes des parois latérales de l'adaptateur sont espacées en direction transversale de faces latérales internes de l'organe de liaison du fait de la coopération mutuelle desdits moyens d'appui.

Selon un autre aspect, l'invention couvre un balai d'essuyage ou bras d'entraînement, caractérisé en ce qu'il comprend ou porte un adaptateur selon l'une des caractéristiques listées ci-dessus, ou un premier ou deuxième ensemble tel qu'évoqué également.

L'invention couvre un troisième ensemble comprenant un bras d'entraînement et un adaptateur tel que présenté ci-dessus, ou un premier et/ou deuxième ensemble présentés ci-dessus, le bras d'entraînement comprenant une broche transversale reçue dans au moins un des orifices de l'adaptateur, ainsi qu'un verrou en forme de L qui s'étend transversalement le long de la broche.

### DESCRIPTION DES FIGURES

L'invention sera mieux comprise et d'autres détails, caractéristiques et avantages de l'invention apparaîtront à la lecture de la description suivante faite à titre d'exemple non limitatif en référence aux dessins annexés, dans lesquels :
- la figure 1 est une vue schématique en perspective d'un essuie-glace, cet essuie-glace comportant un balai d'essuyage et un bras d'entraînement du balai d'essuyage, qui sont reliés l'un à l'autre par un système de connexion,
- la figure 2 est une vue schématique en perspective d'un balai d'essuyage équipé d'un adaptateur selon l'invention,
- les figures 3 et 4 sont des vues schématiques en perspective d'un connecteur du balai d'essuyage de la figure 2,
- les figures 5 à 8 sont des vues schématiques en perspective de l'adaptateur de la figure 2,
- les figures 9 à 13 sont des vues schématiques en perspective du balai d'essuyage de la figure 2 et de différents bras d'entraînement reliés au balai d'essuyage grâce à l'adaptateur selon l'invention,
- les figures 14 et 15 sont des vues schématiques en perspective d'un organe de liaison visible aux figures 12 et 13, et
- les figures 16 à 20 sont des vues schématiques en perspective du balai d'essuyage de la figure 2 et de différents bras d'entraînement reliés au balai d'essuyage grâce à l'adaptateur selon l'invention.

### DESCRIPTION DETAILLEE

Il faut noter que les figures exposent l'invention de manière détaillée pour mettre en oeuvre l'invention, lesdites figures pouvant bien entendu servir à mieux définir l'invention le cas échéant.

Dans la description qui suit, les dénominations longitudinales ou latérales se réfèrent à l'orientation du balai d'essuyage ou du bras d'entraînement selon l'invention. La direction longitudinale correspond à l'axe principal du balai d'essuyage ou du bras dans lequel il s'étend, alors que les orientations latérales correspondent à des droites concourantes, c'est-à-dire qui croisent la direction longitudinale, notamment perpendiculaires à l'axe longitudinal du balai d'essuyage ou du bras dans son plan de rotation. Pour les directions longitudinales, les dénominations extérieure (ou avant) ou intérieure (ou arrière) s'apprécient par rapport au point de fixation du balai d'essuyage sur le bras, la dénomination intérieure correspondant à la partie où le bras et un demi-balai s'étendent, ou par rapport au point de fixation du bras au véhicule. Enfin, les directions référencées comme supérieures ou inférieures correspondent à des orientations perpendiculaires au plan de rotation du balai d'essuyage, la dénomination inférieure contenant le plan du pare-brise.

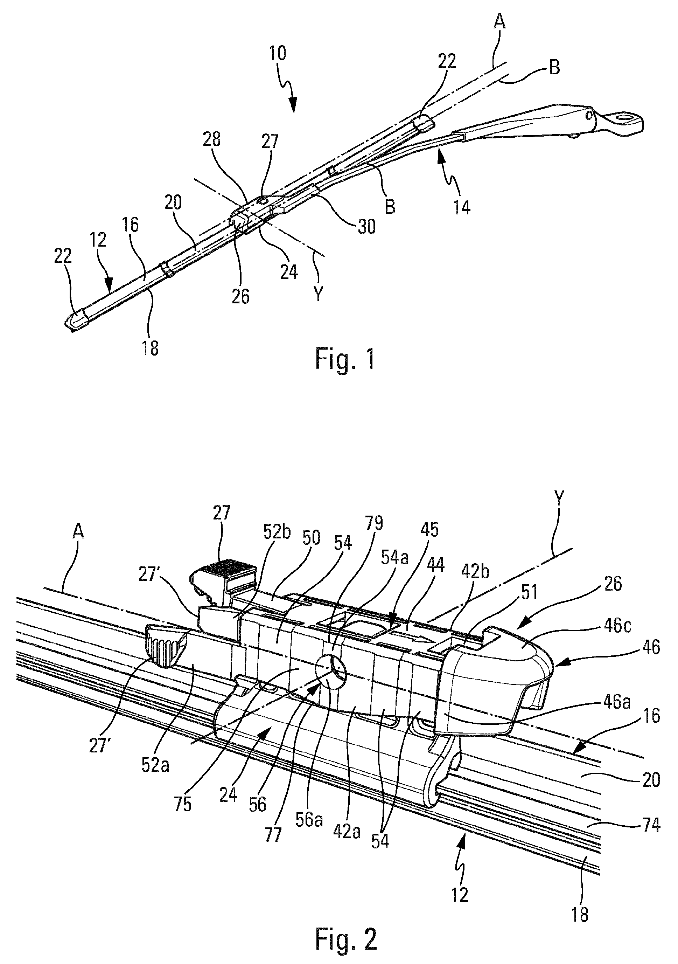

Il est illustré à la figure 1 un essuie-glace 10 comportant notamment un balai d'essuyage 12 et un bras 14 d'entraînement du balai d'essuyage 12. Le bras d'entraînement forme un bras d'essuie-glace.

Le balai d'essuyage 12 est de préférence du type flat blade et comprend un corps longitudinal 16, une lame d'essuyage 18, en général en caoutchouc, et au moins une vertèbre qui rigidifie la lame et favorise son application sur un pare-brise de véhicule.

Le corps 16 du balai d'essuyage 12 peut comporter un déflecteur aérodynamique supérieur 20 destiné à améliorer le fonctionnement du système d'essuyage, le but de ce déflecteur étant d'améliorer le plaquage du balai d'essuyage sur le pare-brise et donc la performance aérodynamique de l'essuie-glace.

Le balai d'essuyage 12 peut comprendre en outre des embouts d'extrémité 22 ou agrafes d'accrochage de la lame 18 et de la vertèbre sur le corps 16, ces embouts 22 étant situés à chacune des extrémités longitudinales du corps 16.

Le balai d'essuyage 12 comprend sensiblement en son milieu un connecteur 24 intermédiaire. Un adaptateur 26 solidaire du bras 14 est monté sur le connecteur 24 de façon à garder un degré de liberté en pivotement autour d'un axe d'articulation ou de pivotement Y qui est un axe transversal sensiblement perpendiculaire à l'axe longitudinal du balai d'essuyage 12. Ce degré de liberté autorise un pivotement du balai d'essuyage 12 vis-à-vis du bras 14 et permet ainsi au balai d'essuyage de suivre la courbure du pare-brise lors de ses déplacements. L'adaptateur 26 peut être désolidarisé du bras 14 par appui sur un bouton d'actionnement, ici un bouton poussoir 27, porté par l'adaptateur.

Le bras 14 est destiné à être entraîné par un moteur pour suivre un mouvement angulaire de va-et-vient permettant d'évacuer l'eau et éventuellement d'autres éléments indésirables recouvrant le pare-brise. L'adaptateur 26 assure la liaison du balai d'essuyage 12 au bras 14 et en particulier à une tête ou pièce terminale 28 du bras qui peut être formée d'une seule pièce avec le bras ou rapportée et fixée sur celui-ci.

Dans l'exemple représenté, la pièce terminale 28 du bras forme une chape à section transversale sensiblement en U.

La pièce terminale 28 a une forme allongée dont l'axe d'allongement A est en général sensiblement parallèle à l'axe d'allongement ou longitudinal du balai d'essuyage 12. Il s'agit de la direction longitudinale de l'adaptateur. La pièce terminale 28 comprend une partie 30 de liaison au reste du bras 14, par exemple par sertissage. Cette partie 30 a une forme générale allongée et s'étend le long d'un axe B sensiblement parallèle à l'axe longitudinal A et à distance de cet axe, comme cela est visible aux figures 1 et 2. La partie 30 est reliée à une extrémité arrière ou intérieure de du reste de la pièce terminale 28.

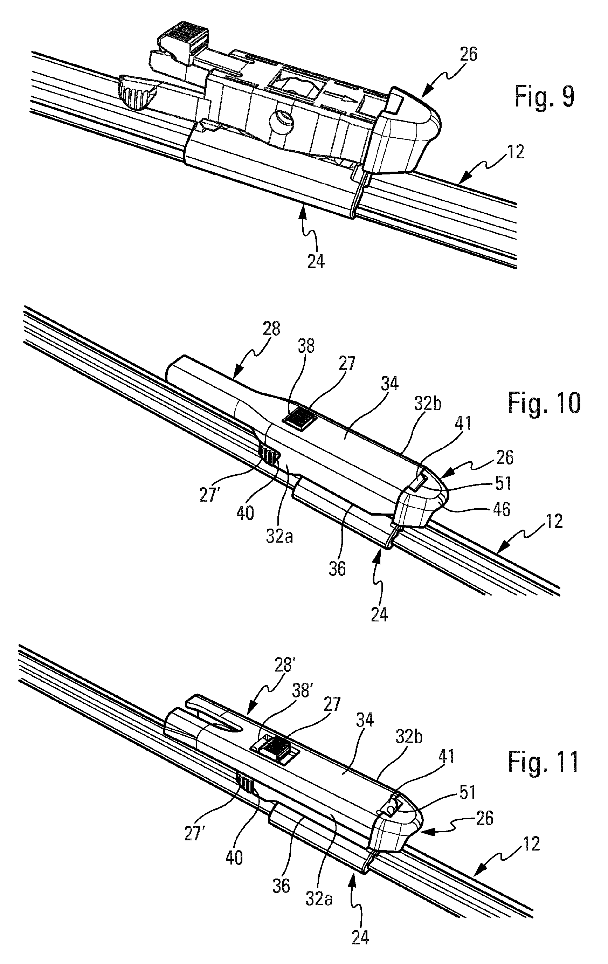

L'adaptateur 26 est du type « universel » et est destiné à être monté indifféremment sur des pièces terminales 28 de différents bras, voire sur des bras non équipés de pièces terminales, comme cela sera décrit plus en détail dans ce qui suit en référence aux figures 10 à 20.

Les figures 2 à 9 montrent un mode de réalisation de l'adaptateur 26 selon l'invention ainsi que du connecteur 24 destiné à coopérer avec cet adaptateur, l'adaptateur et le connecteur formant ensemble un système de connexion du balai d'essuyage 12 au bras 14 ou à un bras 14 parmi plusieurs types de bras.

L'adaptateur 24 a une forme générale allongée le long de l'axe longitudinal A, autrement appelé direction longitudinale. Il comprend un corps comportant deux parois latérales 42a, 42b par exemple sensiblement parallèles entre elles et à l'axe longitudinal A, et à distance l'une de l'autre. Ces parois 42a, 42b sont reliées entre elles à leurs extrémités supérieures par une paroi transversale supérieure 44 sensiblement perpendiculaire aux parois latérales 42a, 42b. Les parois 42a, 42b, 44 ont ici une forme allongée en direction longitudinale.

Ces parois latérales 42a et 42b sont toutes deux délimitées par une face interne tournée vers un logement 45 et par une face externe référencée 75. Cette face externe 75 est bordée par un bord longitudinal inférieur 77 et par un bord longitudinal supérieur 79 opposé au bord longitudinal inférieur 77.

Les parois 42a, 42b, 44 de l'adaptateur 26 définissent entre elles un espace longitudinal, autrement appelé logement, 45 dans lequel est destinée à être montée une partie du connecteur 24. Les parois 42a, 42b sont ici du type à double peau et comportent chacune deux peaux, respectivement interne et externe, parallèles et à distance transversale l'une de l'autre. Les peaux sont reliées ensemble par des nervures rectilignes transversales.

Le corps de l'adaptateur 26 est relié à une première de ses extrémités longitudinales à un carénage ou capotage, aussi appelé casquette ou tête 46. Cette tête 46 a une dimension latérale supérieure à celle du corps de l'adaptateur et une hauteur également supérieure à celle du corps. Les parois latérales 42a, 42b du corps de l'adaptateur sont ainsi en retrait ou décalées par rapport à des faces latérales externes 46a de la tête, et sa paroi supérieure 44 est en retrait ou décalée par rapport à une face supérieure externe 46b de la tête.

Les faces latérales 46a de la tête 46 sont reliées aux parois latérales 42a, 42b du corps par des faces arrière latérales 48a, respectivement, qui s'étendent sensiblement perpendiculairement à l'axe longitudinal A. La face supérieure 46c de la casquette 46 est reliée à la paroi supérieure 44 du corps par une autre face arrière supérieure 48b qui s'étend également sensiblement perpendiculairement à l'axe longitudinal A.

Les faces arrière 48a, 48b de la tête 46 forment des faces d'appui de l'extrémité extérieure ou avant de la pièce terminale 28. Plus précisément, en position montée de l'adaptateur dans la pièce terminale 28, les bords libres avant des jambes latérales de la pièce terminale sont destinés à venir en appui sur les faces 48a, et le bord libre avant de la paroi transversale de la pièce terminale est destiné à venir en appui sur la face 48b.

La paroi supérieure 44 du corps de l'adaptateur 26 comprend, sensiblement en son milieu, une fenêtre 49. La paroi supérieure 44 comprend à son extrémité longitudinale opposée à la tête 46 des fentes longitudinales parallèles entre elles et à l'axe longitudinal A et espacées les unes des autres, de façon à définir entre elles au moins une portion d'une languette longitudinale 50.

La languette 50 s'étend longitudinalement du côté opposé à la tête 46, dans le prolongement de la paroi supérieure 44. Elle est élastiquement déformable et est reliée à son extrémité libre extérieure ou avant au bouton poussoir supérieur 27 précité, qui est en saillie sur la languette 50. A l'état libre sans contrainte, chaque languette 50 est telle que le bouton poussoir 27 est situé au-dessus d'un plan passant par la paroi supérieure 44. Les déformations élastiques des languettes ont ici lieu dans un plan longitudinal médian sensiblement vertical, c'est-à-dire sensiblement perpendiculaire à la paroi supérieure 44. L'adaptateur 26 est ainsi équipé d'un bouton poussoir supérieur 27.

Lors du montage de l'adaptateur 26 dans la pièce terminale 28, le bouton poussoir 27 est destiné à s'engager par encliquetage élastique dans l'ouverture 38 pour verrouiller l'adaptateur vis-à-vis de la pièce terminale.

L'adaptateur 26 comprend en outre un orifice supérieur 51 d'engagement d'une patte d'une pièce terminale de bras. Cet orifice 51 est ici formé en partie dans la tête 46, à l'extrémité arrière de celle-ci, et en partie dans la paroi supérieure 44, à l'extrémité avant de celle-ci. L'orifice 51 a une forme générale carrée ou rectangulaire.

Les parois latérales 42a, 42b du corps se prolongent longitudinalement vers l'intérieur par des pattes longitudinales 52a, 52b élastiquement déformables. Chaque paroi 42a, 42b est reliée à une patte 52a, 52b, ces pattes 52a, 52b étant sensiblement parallèles et symétriques par rapport à un plan longitudinal médian, sensiblement vertical, c'est-à-dire perpendiculaire à la paroi supérieure 44 de l'adaptateur. Les extrémités libres des pattes 52a, 52b, qui sont situées du côté opposé à la tête 46, portent chacune un bouton poussoir latéral 27' en saillie. Chaque patte 52a, 52b porte ainsi un bouton poussoir 27". Les déformations élastiques des pattes 52a, 52b ont ici lieu dans un plan longitudinal sensiblement horizontal, c'est-à-dire sensiblement parallèle à la paroi supérieure 44. Les pattes 52a, 52b peuvent être rapprochées l'une de l'autre par déformation élastique. Les boutons poussoirs 27" sont conformés pour coopérer avec des encoches de la pièce terminale 28, comme cela sera décrit plus en détail dans ce qui suit.

Les parois latérales 42a, 42b comprennent chacune un orifice 56 traversant. Les orifices 56 des parois latérales 42a, 42b sont sensiblement coaxiaux et définissent ici l'axe Y de pivotement de l'adaptateur 24 sur le connecteur 24, et donc du balai d'essuyage vis-à-vis du bras. Les orifices 56 sont par exemple à section circulaire et comprennent chacun une surface interne 56a sensiblement cylindrique. Les orifices 56 débouchent à leurs extrémités latérales externes sur les faces externes 75 des parois 42a, 42b, respectivement, et à leurs extrémités latérales internes dans le logement 45.

Les faces latérales internes en regard des parois latérales 42a, 42b comprennent des protubérances 60. Chaque paroi latérale 42a, 42b comprend une protubérance 60, les protubérances étant ici en regard l'une de l'autre et s'étendant sensiblement l'une vers l'autre. Les protubérances 60 sont symétriques par rapport à un plan longitudinal médian de l'adaptateur, perpendiculaire à la paroi supérieure 44. Chaque protubérance 60 présente également un plan de symétrie passant par l'axe de pivotement Y et perpendiculaire à l'axe longiA.

Chaque protubérance 60 est trouée et comprend un trou traversant. Ce trou est ici formé par un des orifices 56 précités. Chaque protubérance 60 est ainsi située sur la face interne de la paroi latérale 42a ou 42b de sorte à être traversée par l'orifice 56 de cette paroi.

Chaque protubérance 60 a une forme générale cylindrique et ici tubulaire du fait de l'orifice 56 qui la traverse. L'axe de chaque orifice 56, qui est confondu avec l'axe de pivotement Y, est également confondu avec l'axe de la protubérance cylindrique 60 correspondante, si bien que l'orifice est centré vis-à-vis de la protubérance. Chaque protubérance 60 forme ainsi un bourrelet annulaire de matière autour de l'orifice 56, ayant sensiblement une épaisseur radiale par rapport à l'axe de pivotement Y sensiblement constante. Chaque protubérance 60 a une dimension axiale le long de l'axe de pivotement Y qui représente environ 10 à 20% de la dimension axiale ou largeur du logement 45 le long de l'axe de pivotement Y. Chaque protubérance 60 a un diamètre externe qui représente environ 60 à 80% de la hauteur de la paroi latérale 42a, 42b correspondante, mesurée dans une direction sensiblement perpendiculaire à l'axe de pivotement Y.

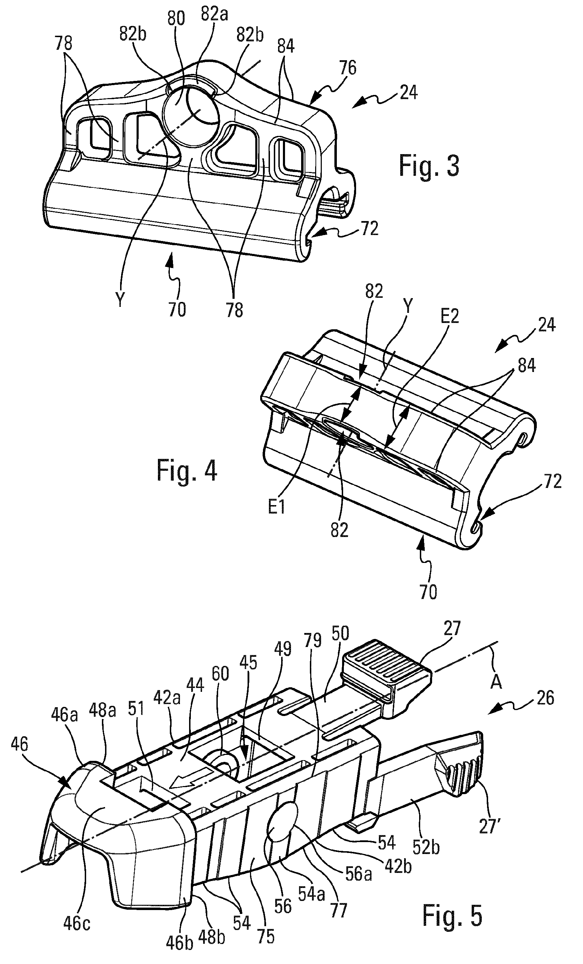

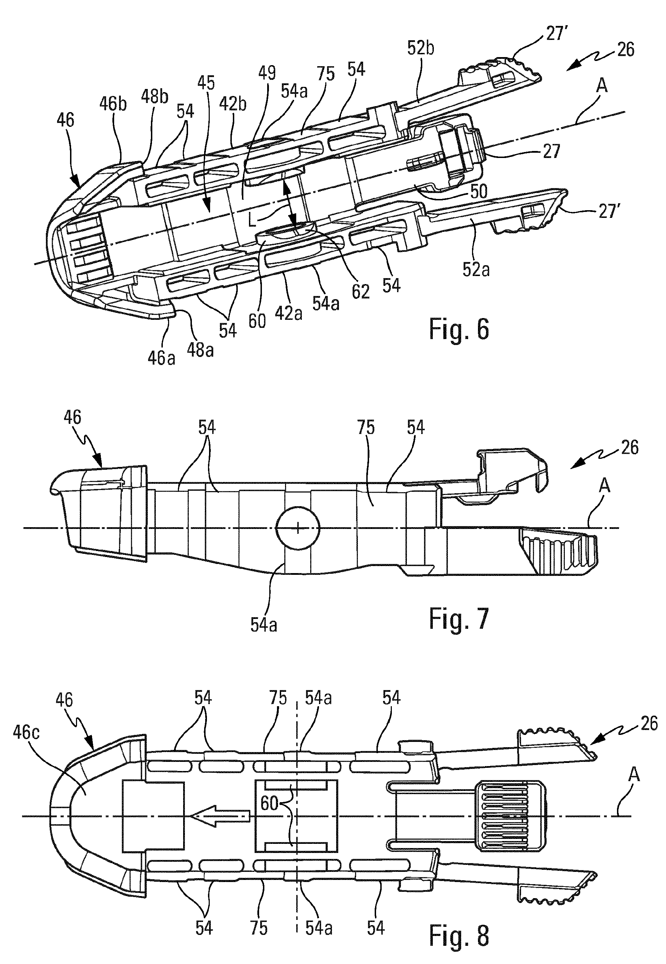

Comme cela est visible aux figures 5 et 6, chaque protubérance 60 comprend une partie, ici inférieure, tronquée ou chanfreinée. Chaque partie tronquée ou chanfreinée définit une rampe 62 qui s'étend dans un plan incliné par rapport aux parois latérales 42a, 42b. Chaque rampe 62 définit une surface de glissement destinée à coopérer avec le connecteur 24. Les rampes 62 des protubérances 60 sont inclinées de sorte qu'elles s'éloignent l'une de l'autre du haut vers le bas. Leurs extrémité inférieures, situées du côté opposé à la paroi supérieure 44, sont espacées l'une de l'autre d'une distance L le long de l'axe de pivotement Y (figure 6). L'extrémité inférieure de chaque rampe 60 s'étend à faible distance, le long de l'axe de pivotement Y, de la face interne de la paroi latérale 42a, 42b correspondante et peut être directement reliée à cette face interne. Dans ce dernier cas, la distance L est sensiblement égale à la distance entre les faces internes des parois 42a, 42b ou à la largeur du logement 45. Chaque rampe 62 s'étend sur une circonférence autour de l'axe de pivotement Y, représentant un angle compris entre 30 et 150°, et de préférence entre 90 et 120°.

Les parois latérales 42a, 42b du corps de l'adaptateur 26 comprennent en outre sur leurs faces externes 75 un ou des moyens d'appui 54, 54a en saillie de la face externe 75 qui les porte. Ce moyen d'appui 54, 54a définit des faces d'appui en direction transversale, c'est-à-dire perpendiculairement à la direction longitudinale A passant par les faces latérales 42a et 42b.

Au moins certains 54a de ces moyens d'appui en saillie sont situés au niveau des orifices 56, et sont traversés par ces orifices 56. Il existe ainsi une interférence géométrique entre le périmètre externe de l'orifice 56 et le moyen d'appui 54a.

Les moyens d'appui 54, 54a en saillie comprennent ici des bandes de matière 54, 54a en saillie sur les faces externes 75 des parois latérales 42a, 42b. Les bandes de matière ont une forme allongée et s'étendent transversalement à la direction longitudinale A entre les bords longitudinaux inférieurs 77 et supérieurs 79 des parois latérales 42a, 42b, le bord longitudinal supérieur étant commun à la paroi supérieure 44.

Les bandes de matière 54, 54a définissent des faces d'appui parallèles, ou sensiblement parallèles, entre elles. Ces faces d'appui sont également ici parallèles, ou sensiblement parallèles, aux faces externes 75 des parois latérales 42a, 42b. Un plan passant par la face d'appui d'une ou plusieurs bandes de matières est ainsi parallèle à un plan passant par la face externe 75. Une droite passant par ces faces d'appui est aussi parallèle, ou sensiblement parallèle, à l'axe longitudinal A de l'adaptateur 26.

Les bandes de matière 54, 54a sont espacées en direction longitudinale A les unes des autres et réparties sur les parois latérales 42a, 42b dans la même direction. Dans l'exemple représenté, chaque paroi latérale comprend quatre desdites bandes de matière 54, 54a. Les bandes de matière de l'une des parois latérales sont symétriques par rapport aux bandes de matière de l'autre des parois latérales, par rapport à un plan longitudinal médian de l'adaptateur sensiblement perpendiculaire à sa paroi supérieure 44.

Les bandes de matière 54, 54a ont sensiblement toutes la même épaisseur mesurée selon l'axe de pivotement Y ou dimension en direction transversale. Les bandes de matière 54a traversées par les orifices 56 ont une largeur ou dimension en direction longitudinale, mesurée selon la direction longitudinale A, inférieure à celle des autres bandes de matière 54, et par exemple également inférieure au diamètre desdits orifices 56.

Le plan transversal médian perpendiculaire à la paroi supérieure 44 de l'adaptateur 26 et passant par l'axe de pivotement Y traverse les bandes de matière 54a sensiblement en leur milieu et peut par exemple former un plan de symétrie de ces bandes. Autrement dit, les bandes de matière 54a sont notamment sensiblement centrées sur l'axe de pivotement Y et les orifices 56.

L'adaptateur 26 décrit ci-dessus est avantageusement unitaire, c'est-à-dire constitué par une même matière synthétique. Il peut ainsi être fabriqué au cours d'une unique opération de moulage, notamment par injection.

L'adaptateur 26 est fixé au connecteur 24 grâce aux protubérances 60 qui forment des moyens de fixation de l'adaptateur au connecteur et qui peuvent en outre former des moyens de pivotement de l'adaptateur vis-à-vis du connecteur. Les moyens de fixation sont du type à encliquetage élastique, les protubérances 60 de l'adaptateur 26 étant destinées à coopérer par encliquetage élastique avec des moyens complémentaires du connecteur 24.

Le connecteur 24, mieux visible aux figures 3 et 4, est agencé pour être rendu solidaire, par exemple par sertissage, du balai d'essuyage 12. Le connecteur 24 assure une liaison mécanique dite complète avec le balai d'essuyage 12, en ce sens qu'il n'existe pas de degré de liberté. Le connecteur 24 peut également assurer une fonction de transport et de distribution d'un liquide de lavage du pare-brise du véhicule.

Le connecteur 24 comprend une embase 70 qui s'étend longitudinalement et transversalement. Cette embase 70 comprend une zone de solidarisation 72 sur le balai d'essuyage 12, et plus particulièrement sur au moins une vertèbre 74 de ce balai d'essuyage. Cette zone de solidarisation 72 prend par exemple la forme d'une saignée ménagée dans l'embase 70, cette saignée étant bordée par deux crochets aptes à venir en prise sur le balai d'essuyage.

Dans l'exemple représenté, le balai d'essuyage 12 comprend deux vertèbres 74 parallèles et coplanaires qui sont espacées l'une de l'autre pour définir un espace de logement de la lame d'essuyage 18 ou du corps 16 du balai d'essuyage. Chaque vertèbre comprend un bord longitudinal, opposé à la lame 18, qui est reçu dans la saignée du connecteur 24.

L'embase 70 est surmontée d'un flanc 76, par exemple, issu de matière avec l'embase. Ce flanc 76 présente une dimension transversale inférieure à celle de l'embase et une dimension longitudinale sensiblement égale à celle de l'embase. Le flanc 76 est par exemple centré sur l'embase 70, selon l'axe de pivotement Y. Le flanc 4 peut présenter une pluralité de nervures 78 qui assurent un renforcement mécanique du flanc.

Le connecteur 24 et l'adaptateur 26 sont reliés mécaniquement par une liaison pivot. En ce qui concerne le connecteur 24, cette liaison pivot est mise en oeuvre par une cavité 80 réalisée dans le flanc 76. Cette cavité 80 s'étend selon l'axe de pivotement Y et présente une section circulaire. Elle traverse le flanc 76. En d'autres termes, la cavité 80 a un axe central centré sur l'axe de pivotement Y.

Le connecteur 24 décrit ci-dessus est avantageusement unitaire, c'est-à-dire constitué par une même matière synthétique. Ce connecteur peut ainsi être fabriqué au cours d'une unique opération de moulage, notamment par injection.

L'adaptateur 26 est monté sur le connecteur 24 par encliquetage élastique de ses protubérances 60 dans la cavité 80 du connecteur. Les rampes 62 des protubérances 60 de l'adaptateur 26 coopèrent avec le connecteur pour faciliter ce montage. De son côté, le connecteur comprend également des moyens facilitant une insertion des protubérances 60 de l'adaptateur 26 dans sa cavité 10.

Ces moyens sont ici aménagés sur le flanc 76 du connecteur 24. Il s'agit ici de rainures 82 ménagées dans les faces latérales délimitant le flanc 76, et au droit de laquelle la cavité 80 se termine. On comprend ici que chaque rainure 82 et la cavité 80 sont en intersection l'une avec l'autre, la rainure 82 s'étendant ainsi depuis une arête 84 du flanc 76 jusqu'au trou formant la cavité 80. Au droit de chaque rainure 82, le flanc 76 présente une épaisseur E1 inférieure à une épaisseur E2 d'une portion du flanc 76 bordant ladite rainure 82. Ces épaisseurs E1, E2 sont mesurées selon une direction parallèle à l'axe de pivotement Y. Ainsi formée, cette rainure 82 est délimitée par un fond 82a et par deux tranches 82b qui relient le fond 82a à la face latérale correspondant du flanc.

Les fonds 82a des rainures 82 sont parallèles ou inclinés l'un par rapport à l'autre. Dans ce dernier cas, ils sont inclinés de sorte que leurs extrémités supérieures, situées du côté opposé à la cavité 80, soient plus proches que ne le sont leurs extrémités inférieures.

L'assemblage de l'adaptateur 26 sur le connecteur 24 est réalisé uniquement par une translation verticale selon un axe perpendiculaire à la paroi supérieure 44 de l'adaptateur. Lors de cette translation, les protubérances 60 de l'adaptateur 26 s'engagent dans les rainures 82 du connecteur et coopèrent avec leurs tranches 82b pour centrer l'adaptateur sur le connecteur. Les rampes 62 ont des surfaces de guidage qui coopèrent par glissement avec les fonds 82a des rainures. Pour cela, la distance L précitée est de préférence supérieure à l'épaisseur E1. Par ailleurs, la distance inter protubérances 60, mesurée le long de l'axe de pivotement Y, est inférieure à la largeur de la cavité 80 ainsi que l'épaisseur E2.

Lors de l'insertion des protubérances 60 dans les rainures 82, les rampes 62 prennent appui sur les fonds des rainures et la translation vers le bas de l'adaptateur est poursuivie de sorte que les parois latérales 42a, 42 de l'adaptateur soient contraintes de se déformer en s'écartant l'une de l'autre du fait du glissement des rampes sur les fonds des rainures. Cette opération est poursuivie jusqu'à ce que les protubérances 60 s'engagent par encliquetage ou retour élastique dans la cavité 80 du connecteur. L'adaptateur est alors fixé au connecteur et peut en outre pivoté sur lui autour de l'axe de pivotement Y, par coopération de ses protubérances avec la surface cylindrique interne 80a de la cavité. La cavité 80 a un diamètre interne sensiblement égal ou légèrement supérieur à celui des protubérances 60. On obtient alors le montage représenté en figure 9.

Comme évoqué précédemment, l'adaptateur 26 est du type universel car il est apte à être fixé à plusieurs types de bras, que ce soit des bras à pièce terminale ou sans pièce terminale.

Les figures 10 à 20 montrent plusieurs types de bras pouvant être équipés de l'adaptateur 26 selon l'invention.

On se réfère d'abord aux figures 10 et 11 qui représentent respectivement deux pièces terminales 28, 28' de bras d'entraînement différents.

Chaque pièce terminale 28, 28' comprend deux jambes latérales 32a, 32b dont les bords longitudinaux supérieurs sont reliés entre eux par une paroi transversale supérieure 34. Les jambes 32a, 32b et la paroi 34 délimitent entre elles un espace de logement de l'adaptateur 26. Les jambes 32a, 32b peuvent comprendre au niveau de leurs bords longitudinaux inférieurs des moyens 36, tels que des crochets, de retenue de l'adaptateur 26 dans l'espace précité.

La paroi supérieure 34 comprend une ouverture 38, 38' traversante destinée à recevoir le bouton poussoir supérieur 27. En position de montage, le bouton poussoir 27 est logé dans cette ouverture 38 et peut traverser cette dernière de façon à être en saillie sur la face supérieure de la paroi 34. Le montage du bouton poussoir 27 dans l'ouverture 38 se fait par simple engagement ou emboîtement, de préférence par encliquetage élastique.

Les parois latérales 32a, 32b peuvent comprendre chacune une encoche 40 de forme complémentaire d'un bouton poussoir latéral 27'. En position de montage, les boutons poussoirs latéraux 27' sont logés dans ces encoches 40 et peuvent les traverser de façon à être en saillie sur les faces externes des parois 32a, 32b. Le montage des boutons poussoirs 27" dans les encoches 40 se fait par simple engagement ou emboîtement, de préférence par encliquetage élastique.

Les pièces terminales 28, 28' sont différentes. Elles ont globalement la même forme mais diffèrent les unes des autres notamment par des dimensions et par la forme et la taille de leurs ouvertures 38, 38' ou encoches 40.

Les parois supérieures 34 des pièces terminales 28, 28' se prolongent vers l'extérieur pour former chacune une patte 41 à section longitudinale sensiblement en S, qui est configurée pour être engagée dans l'orifice 51 de l'adaptateur 26.

Les pièces terminales 28, 28' ont sensiblement la même largeur externe. Par ailleurs, les nervures 54 des faces externes des parois latérales du corps de l'adaptateur 26 peuvent être espacées d'une paroi à l'autre d'une distance transversale sensiblement égale à la largeur interne de la pièce transversale 28, 28', de façon à ce que la pièce terminale soit calée en direction transversale par coopération de ses jambes avec les parois latérales du corps de l'adaptateur.

On va maintenant décrire le montage de l'adaptateur 26 selon l'invention sur chacune des pièces terminales 28, 28'.

L'adaptateur 26 est engagé dans la pièce terminale 28, 28' en inclinant tout d'abord l'axe de l'adaptateur vis-à-vis de celui A de la pièce terminale 28 puis en engageant la patte 41 de la pièce terminale dans l'orifice 51 de l'adaptateur. Lors de cet engagement, les jambes de la pièce terminale commencent par glisser sur les moyens d'appui 54 de l'adaptateur. De plus, le bord d'extrémité avant de la paroi supérieure de la pièce terminale vient en appui sur la face 48b de la tête 46 de l'adaptateur. L'extrémité arrière de l'adaptateur est ensuite rapprochée de la pièce terminale jusqu'à ce que les boutons poussoirs latéraux 27' s'engagent par encliquetage élastique dans les encoches 40 de la pièce terminale 28, 28'. Les bords d'extrémité avant des jambes latérales 32a, 32b de la pièce terminale viennent en appui sur les faces 48a de la tête 46 de l'adaptateur. Les axes longitudinaux de l'adaptateur et de la pièce terminale 28 sont alors sensiblement parallèles.

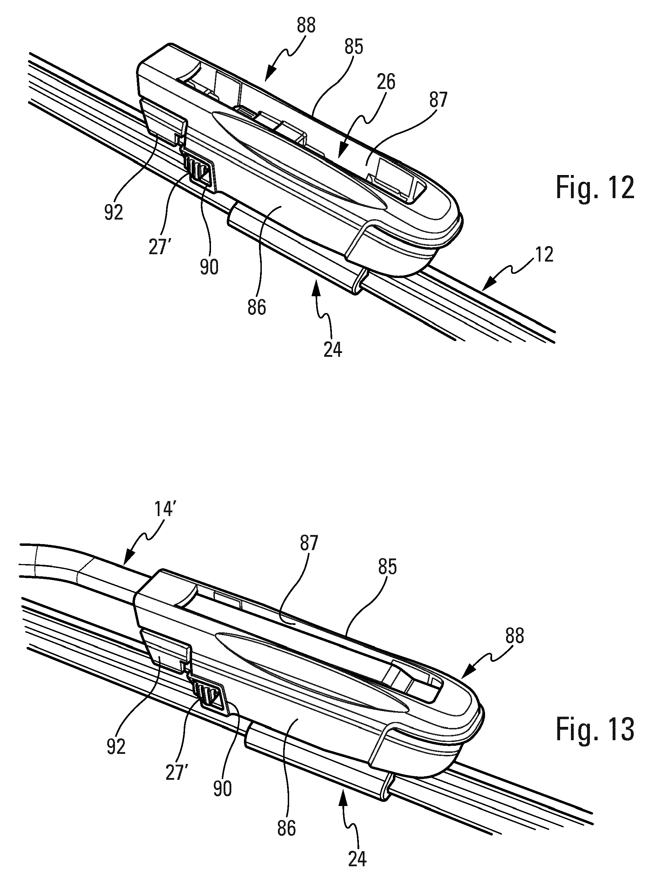

On se réfère maintenant aux figures 12 à 15, dans lesquelles l'adaptateur 26 est relié à un bras 14 du type bras tige, c'est-à-dire dépourvu de pièce terminale supplémentaire, par l'intermédiaire d'un premier organe de liaison 88.

Cet organe de liaison 88 est monté sur l'adaptateur 26 et le recouvre intégralement dans l'exemple représenté. Il a une forme longitudinale et comprend un logement interne dans lequel est monté et retenu l'adaptateur. Il comprend à son extrémité arrière des encoches latérales destinées à recevoir par encliquetage élastiques les boutons poussoirs 27', respectivement.

Des parois latérales 85, 86 de l'organe 88 comprennent sur leurs faces internes 87, 89 des moyens en saillie 100, 100a qui définissent des faces d'appui en direction transversale, et qui sont configurés pour coopérer avec les moyens d'appui en saillie 54, 54a de l'adaptateur 26.

Les moyens en saillie 100, 100a de l'organe 88 comprennent ici des bandes de matière 100, 100a en saillie sur les faces internes 87 et 89 des parois latérales 85, 86 de l'organe 88. Les bandes de matière ont une forme allongée et s'étendent longitudinalement entre les bords longitudinaux inférieurs et supérieurs de ces parois.

Les bandes de matière 100, 100a définissent des surfaces d'appui sensiblement parallèles. Ces surfaces d'appui sont ici sensiblement parallèles aux faces internes 87, 89 des parois latérales ainsi qu'à l'axe longitudinal A de l'organe 88.

Les bandes de matière 100, 100a sont espacées en direction longitudinale les unes des autres et réparties sur les parois latérales 85, 86 dans la même direction. Dans l'exemple représenté, chaque paroi latérale comprend trois desdites bandes de matière. Les bandes de matière de l'une des parois latérales sont symétriques par rapport aux bandes de matière de l'autre des parois latérales, par rapport à un plan longitudinal médian de l'organe perpendiculaire à sa paroi supérieure.

Les bandes de matière ont sensiblement toutes la même épaisseur ou dimension en direction transversale, mesurée selon l'axe de pivotement Y. Les bandes de matière médianes 100a ont une largeur ou dimension en direction longitudinale, mesurée selon la direction longitudinale A inférieure à celle des autres bandes de matière.

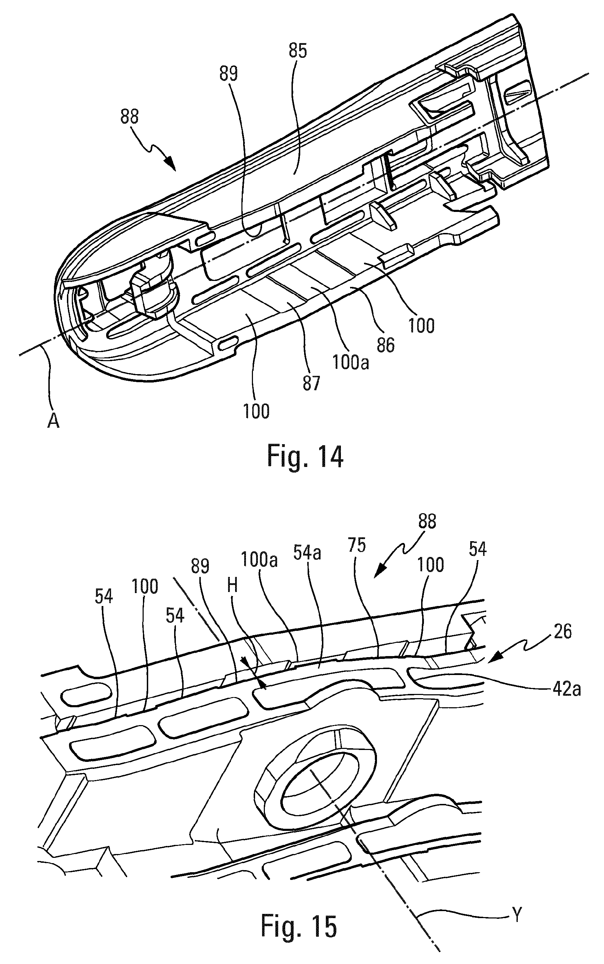

Comme cela est visible en figure 15, les faces externes 75 des parois latérales 42a de l'adaptateur 26 sont espacées d'une distance H en direction transversale, c'est-à-dire selon l'axe de pivotement Y, des faces internes 89 de l'organe de liaison 88, du fait de la coopération mutuelle de leurs bandes de matière 54, 54a, 100, 100a.

Le bras tige 14' comprend une extrémité engagée dans l'organe de liaison 88, sur sensiblement toute sa longueur, depuis l'extrémité longitudinale arrière de l'organe 88. Le bras tige 14' est solidarisé à l'organe 88 par des moyens appropriés et peut être démonté de l'organe par l'actionnement de boutons poussoirs 92 portés par l'organe et destinés à coopérer avec l'extrémité du bras tige 14'.

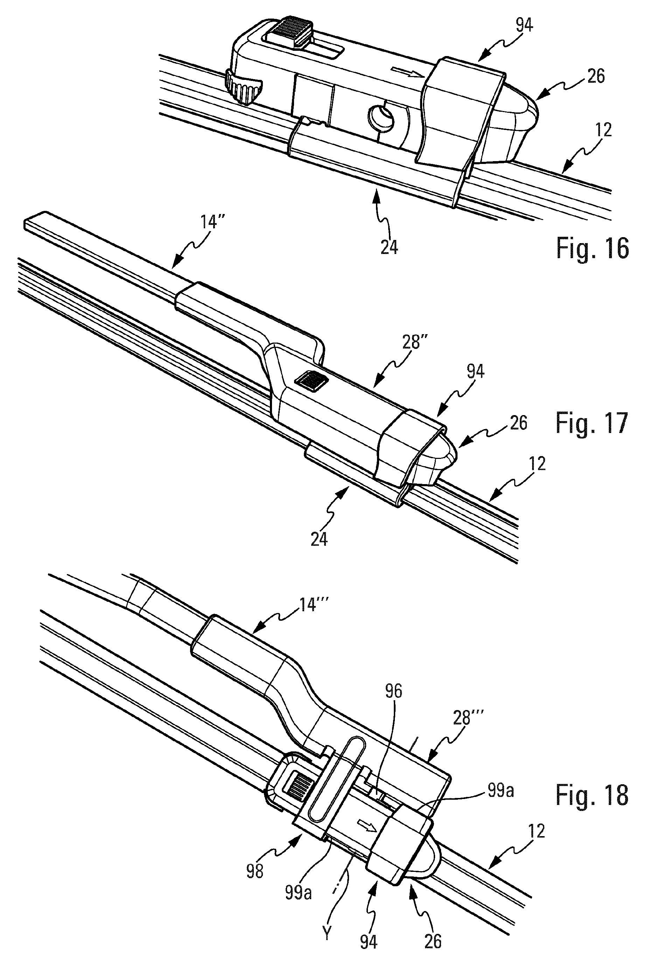

La figure 16 montre un second organe de liaison 94 qui peut être utilisé pour relier l'adaptateur 26 à deux autres types de bras, représentés respectivement aux figures 17 et 18.

L'organe de liaison 94 est similaire à l'adaptateur et est destiné à être monté sur l'adaptateur pour le recouvrir au moins en partie. Il est notamment utilisé pour pouvoir équiper un bras 14" doté d'une pièce terminale 28" large avec l'adaptateur 26. La pièce terminale 28" du bras 14" de la figure 17 diffère de celles des figures 10 et 11 notamment en ce qu'elle a une largeur plus importante. L'organe de liaison 94 est configuré pour rattraper les jeux entre l'adaptateur 26 et la pièce terminale 28", et pour épouser les formes de ces derniers en étant pris en sandwich entre eux. La pièce terminale 28" est similaire à celles des figures 10 et 11.

Le bras 14"' de la figure 18 est un bras à verrouillage latéral (de l'anglais side-lock) dont la pièce terminale 28'" comprend d'une part une broche cylindrique 96 s'étendant transversalement sur un côté de la pièce terminale, ainsi qu'un verrou 98 en forme de L qui s'étend transversalement du même côté que la broche 96, et parallèlement et à distance de cette dernière.

La broche 96 est destinée à traverser des orifices latéraux de l'organe 94, qui sont alignés sur l'axe de pivotement Y et donc alignés avec les orifices 56 de l'adaptateur 26 et la cavité 80 du connecteur 24. La broche 96 est engagée dans ces orifices et cavités jusqu'à ce que sa pièce transversale 28'" prennent appui sur une face latérale externe 99a de l'organe 94. La pièce transversale 28'" peut coopérer par glissement avec la face latérale externe 99a lors du pivotement du balai d'essuyage vis-à-vis du bras 14"'.

Le verrou 98 en L comprend un crochet à son extrémité libre qui est destiné à coopérer par glissement avec une face latérale 99b opposée de l'organe 94 lors du pivotement du balai d'essuyage vis-à-vis du bras 14"', et empêche une désolidarisation accidentelle du balai d'essuyage vis-à-vis du bras en fonctionnement.

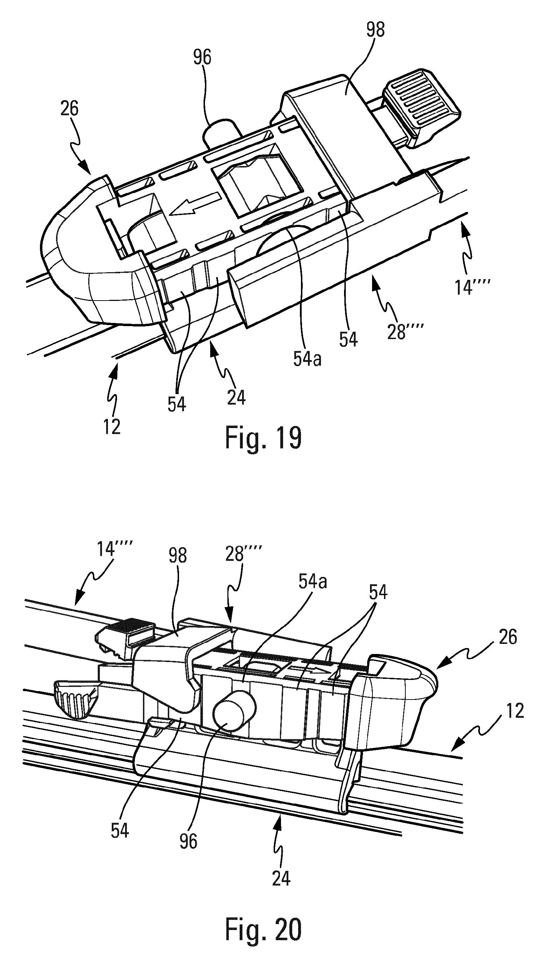

Le bras 14"" des figures 19 et 20 est un autre bras à verrouillage latéral dont la pièce terminale 28'" comprend également une broche cylindrique 96 s'étendant transversalement sur un côté de la pièce terminale, ainsi qu'un verrou 98 en forme de L qui s'étend transversalement du même côté que la broche 96, et parallèlement et à distance de cette dernière.

Contrairement au précédent mode de réalisation, le bras 14"" coopère ici directement avec l'adaptateur 26 selon l'invention, sans interposition d'une pièce. La broche 96 est destinée à traverser les orifices 56 de l'adaptateur 26 et la cavité 80 du connecteur. La broche 96 est engagée dans ces orifices et la cavité jusqu'à ce que sa pièce transversale 28"" prennent appui sur la face d'appui de l'une des bandes de matière 54a traversées par l'orifice 56. La pièce transversale 28"" peut coopérer par glissement avec cette face d'appui lors du pivotement du balai d'essuyage vis-à-vis du bras.

Le verrou 98 en L comprend un crochet à son extrémité libre qui est destiné à coopérer par glissement avec la face d'appui de l'une des bandes de matière 54 de l'autre côté de l'adaptateur 26, et empêche une désolidarisation accidentelle du balai d'essuyage vis-à-vis du bras en fonctionnement. Les bandes de matière 54, 54a sur lesquelles le bras 14"" est en appui et peut glisser en fonctionnement sont situées respectivement sur les deux côtés de l'adaptateur 26. Les bandes de matière 54, 54a permettent ainsi de rattraper les jeux transversaux de la technique antérieure, entre l'adaptateur et la pièce terminale du bras 14"".

L'adaptateur 26 « universel » selon l'invention peut ainsi être associé à plusieurs types de bras d'entraînement.

## Revendications

1. Adaptateur (26) pour relier un balai d'essuyage (12) à un bras d'entraînement (14), l'adaptateur comprenant deux parois longitudinales latérales (42a, 42b) espacées l'une de l'autre de façon à former entre elles au moins un logement (45) configuré pour recevoir au moins en partie un connecteur (24) du balai d'essuyage, au moins l'une des parois latérales (42a, 42b) comprenant au moins un orifice (56), ladite paroi latérale (42a, 42b) comprenant en outre un moyen d'appui (54, 54a) en saillie d'une face externe (75) de la paroi latérale (42a, 42b), **caractérisé en ce que** le moyen d'appui (54, 54a) est traversé par au moins un orifice (56), ledit moyen d'appui (54, 54a) étant issu matière avec la face externe (75) de la paroi latérale (42a, 42b).

2. Adaptateur (26) selon la revendication 1, dans lequel les deux parois longitudinales latérales (42a, 42b) sont sensiblement parallèles.

3. Adaptateur (26) selon la revendication 2, dans lequel chacune des parois latérales (42a, 42b) comprend un orifice (56) traversant d'axe (Y) perpendiculaire à une direction longitudinale (A) de l'adaptateur.

4. Adaptateur (26) selon l'une quelconque des revendications précédentes, dans lequel le ou les orifices (56) sont configurés pour recevoir au moins un axe d'articulation de l'adaptateur (26) vis-à-vis du connecteur (24).

5. Adaptateur (26) selon l'une quelconque des revendications précédentes, dans lequel le moyen d'appui (54, 54a) en saillie d'une face externe (75) de la paroi latérale (42a, 42b) est configuré pour former au moins une surface d'appui en direction transversale à une direction longitudinale (A) de l'adaptateur (26).

6. Adaptateur (26) selon l'une quelconque des revendications précédentes, dans lequel ledit moyen d'appui (54, 54a) comprend au moins des bandes de matière (54, 54a) en saillie des faces externes (75) des parois latérales (42a, 42b).

7. Adaptateur (26) selon la revendication 6, dans lequel lesdites bandes de matière (54, 54a) ont une forme allongée et s'étendent longitudinalement entre des bords longitudinaux inférieurs (77) et des bords longitudinaux supérieurs (79) des parois (42a, 42b).

8. Adaptateur (26) selon la revendication 6 ou 7, dans lequel lesdites bandes de matière (54, 54a) définissent des faces d'appui sensiblement parallèles entre elles.

9. Adaptateur (26) selon l'une des revendications 6 à 8, dans lequel lesdites bandes de matière (54, 54a) sont espacées les unes des autres selon une direction longitudinale (A) de l'adaptateur et réparties sur lesdites faces externes (75) dans la même direction.

10. Adaptateur (26) selon l'une des revendications 6 à 9, dans lequel chaque paroi latérale (42a, 42b) comprend au moins quatre desdites bandes de matière (54, 54a).

11. Adaptateur (26) selon l'une des revendications 6 à 10, dans lequel les bandes de matière (54a) traversées par les orifices (56) ont une largeur mesurée selon une direction longitudinale de l'adaptateur (26) inférieure à celle des autres bandes de matière (54).

12. Adaptateur (26) selon l'une des revendications 6 à 11, dans lequel les bandes de matière (54a) traversées par les orifices (56) ont une largeur mesurée selon une direction longitudinale de l'adaptateur (26) inférieure au diamètre desdits orifices (56).

13. Adaptateur (26) selon l'une des revendications 6 à 12, dans lequel les bandes de matière (54, 54a) ont sensiblement toutes la même épaisseur mesurée selon une direction perpendiculaire à une direction longitudinale de l'adaptateur (26).

14. Adaptateur (26) selon l'une des revendications précédentes, dans lequel il est configuré pour être fixé sélectivement à une pièce terminale (28) d'un premier bras, et à une pièce terminale (28') d'un second bras, différente de celle (28) du premier bras, ledit adaptateur comportant à une extrémité une tête (46) définissant au moins une première surface (48a, 48b) d'appui d'une partie de pièce terminale et/ou au moins une partie d'un trou (51) d'engagement d'une partie de pièce terminale.

15. Adaptateur (26) selon la revendication 14, dans lequel il comporte également au moins un bouton poussoir (27, 27') de verrouillage configuré pour coopérer avec la pièce terminale (28, 28') dudit premier et/ou second bras.

16. Adaptateur (26) selon l'une des revendications précédentes, dans lequel il est configuré pour être fixé sélectivement à au moins un organe de liaison (88) agencé pour être fixé à au moins un autre bras (14').

17. Ensemble comprenant un adaptateur (26) selon l'une quelconque des revendications précédentes et un connecteur (24) solidaire du balai d'essuyage (12).

18. Ensemble comprenant un adaptateur (26) selon la revendication 16 et ledit organe de liaison (88) qui est configuré pour recouvrir au moins en partie ledit adaptateur (26), dans lequel ledit organe de liaison (88) comprend deux parois longitudinales latérales (85, 86) destinées à s'étendre sensiblement parallèlement aux parois latérales (42a, 42b) de l'adaptateur (26), et comportant sur leurs faces internes des moyens en saillie (100, 100a) qui sont configurés pour venir en appui en direction transversale sur les moyens d'appui (54, 54a) des parois latérales (42a, 42b) de l'adaptateur (26).

19. Ensemble selon la revendication 18, dans lequel les faces externes (75) des parois latérales (42a, 42b) de l'adaptateur (26) sont espacées en direction transversale de faces latérales internes (87, 89) de l'organe de liaison (88) du fait de la coopération mutuelle desdits moyens d'appui (54, 54a, 100, 100a).

20. Balai d'essuyage (12) ou bras (14) d'entraînement, **caractérisé en ce qu'**il comprend ou porte un adaptateur (26) selon l'une des revendications 1 à 16 ou un ensemble selon la revendication 18 ou 19.

21. Ensemble comprenant un bras d'entraînement et un adaptateur selon l'une quelconque des revendications 1 à 16, ou un ensemble selon l'une quelconque des revendications 17 à 19, le bras d'entraînement comprenant une broche transversale (96) reçue dans au moins un des orifices (56) de l'adaptateur (26), ainsi qu'un verrou (98) en forme de L qui s'étend transversalement le long de la broche (96).
